# EUROPEAN PATENT APPLICATION

(11) **EP 4 266 731 A1**
(43) Date of publication of application: **25.10.2023**
(21) Application number: 21905826.0
(22) Date of filing: 17.12.2021
(51) Int. Cl.: H04W 24/02

(54) **RESOURCE CONFIGURATION METHOD AND APPARATUS, NETWORK NODE, AND STORAGE MEDIUM**

(30) Priority: 18.12.2020 CN 202011507680
(71) Applicant: Vivo Mobile Communication Co., Ltd., Dongguan, Guangdong 523863 (CN)
(72) Inventor: PENG, Shuyan, Dongguan, Guangdong 523863 (CN); WANG, Huan, Dongguan, Guangdong 523863 (CN); LIU, Jinhua, Dongguan, Guangdong 523863 (CN)
(74) Representative: Lavoix
(86) International application number: PCT/CN2021/139103
(87) International publication number: WO 2022/127900

(57) **Abstract**

This application provides a resource configuration method and apparatus, a network node, and a storage medium. The method includes: obtaining, by an IAB node, frequency domain resource information; where the frequency domain resource information is used to indicate an available frequency domain resource of a distributed unit DU of the IAB node.

## Description

### CROSS-REFERENCE TO RELATED APPLICATIONS

This application claims priority to Chinese Patent Application No. 202011507680.8 filed in China on December 18, 2020, which is incorporated herein by reference in its entirety.

### TECHNICAL FIELD

This application relates to the field of communications technologies, and in particular, to a resource configuration method and apparatus, a network node, and a storage medium.

### BACKGROUND

An integrated access backhaul (integrated access backhaul, IAB) system is introduced in some communication systems (for example, a fifth generation mobile communication technology (5th Generation Mobile Communication Technology, 5G) system), where an IAB node in the IAB system includes two functions: a distributed unit (Distributed Unit, DU) and a mobile termination (Mobile Termination, MT). However, current resources of the IAB node are configured in units of the IAB node. For example, a configuration frequency domain resource is a corresponding carrier configured for the IAB node. It can be learned that currently, a configuration effect of configuring a resource for the IAB node is relatively poor.

### SUMMARY

Embodiments of this application provide a resource configuration method and apparatus, a network node, and a storage medium, which can resolve a problem that a resource configuration effect for an IAB node is relatively poor.

According to a first aspect, an embodiment of this application provides a resource configuration method, including:
obtaining, by an integrated access backhaul IAB node, frequency domain resource information; where
the frequency domain resource information is used to indicate an available frequency domain resource of a distributed unit DU of the IAB node.

According to a second aspect, an embodiment of this application provides a resource configuration method, including:
configuring, by a target node, frequency domain resource information for an integrated access backhaul IAB node; where
the frequency domain resource information is used to indicate an available frequency domain resource of a distributed unit DU of the IAB node, and the target node is a centralized control unit (Centralized Unit, CU) or a parent node of the IAB node.

According to a third aspect, an embodiment of this application provides a resource configuration apparatus, including:
an obtaining module, configured to obtain frequency domain resource information; where
the frequency domain resource information is used to indicate an available frequency domain resource of a distributed unit DU of an IAB node.

According to a fourth aspect, an embodiment of this application provides a resource configuration apparatus, including:
a configuration module, configured to configure frequency domain resource information for an integrated access backhaul IAB node; where
the frequency domain resource information is used to indicate an available frequency domain resource of a distributed unit DU of the IAB node, a target node includes the apparatus, and the target node is a centralized control unit CU or a parent node of the IAB node.

According to a fifth aspect, an embodiment of this application provides a network node. The network node is an IAB node, and includes a memory, a processor, and a program or an instruction that is stored in the memory and that may run on the processor. When the program or the instruction is executed by the processor, steps in the resource configuration method on an IAB node side provided in the embodiments of this application are implemented.

According to a sixth aspect, an embodiment of this application provides a network node. The network node is a target node, and includes a memory, a processor, and a program or an instruction that is stored in the memory and that may run on the processor. When the program or the instruction is executed by the processor, steps in the resource configuration method on a target node side provided in the embodiments of this application are implemented.

According to a seventh aspect, an embodiment of this application provides a readable storage medium. The readable storage medium stores a program or an instruction, and the program or the instruction is executed by a processor to implement steps in the resource configuration method on an IAB node side provided in the embodiments of this application, or the program or the instruction is executed by a processor to implement steps in the resource configuration method on a target node side provided in the embodiments of this application.

According to an eighth aspect, a chip is provided. The chip includes a processor and a communication interface, the communication interface is coupled to the processor, and the processor is configured to run a program or an instruction to implement steps in the resource configuration method on an IAB node side provided in the embodiments of this application, or steps in the resource configuration method on a target node side provided in the embodiments of this application.

According to a ninth aspect, a computer program product is provided. The computer program product is stored in a non-transient storage medium, and the computer program product is executed by at least one processor to implement steps in the resource configuration method on an IAB node side provided in the embodiments of this application, or steps in the resource configuration method on a target node side provided in the embodiments of this application.

According to a tenth aspect, a communication device is provided, and is configured to perform steps in the resource configuration method on an IAB node side provided in the embodiments of this application, or steps in the resource configuration method on a target node side provided in the embodiments of this application.

In the embodiments of this application, an IAB node obtains frequency domain resource information, where the frequency domain resource information is used to indicate an available frequency domain resource of a DU of the IAB node. In this way, a frequency domain resource may be allocated to the DU, thereby improving resource configuration precision, and further improving a resource configuration effect for the IAB node.

### BRIEF DESCRIPTION OF DRAWINGS

FIG 1 is a schematic diagram of a wireless communication system to which an embodiment of this application is applicable;
FIG 2 is a block diagram of another wireless communication system to which an embodiment of this application is applicable;
FIG 3 is a flowchart of a resource configuration method according to an embodiment of this application;
FIG 4 is a schematic diagram of an available frequency domain resource according to an embodiment of this application;
FIG 5 is a schematic diagram of another available frequency domain resource according to an embodiment of this application;
FIG 6 is a schematic diagram of another available frequency domain resource according to an embodiment of this application;
FIG 7 is a schematic diagram of another available frequency domain resource according to an embodiment of this application;
FIG 8 is a schematic diagram of another available frequency domain resource according to an embodiment of this application;
FIG 9 is a schematic diagram of another available frequency domain resource according to an embodiment of this application;
FIG 10 is a flowchart of another resource configuration method according to an embodiment of this application;
FIG 11 is a structural diagram of a resource configuration apparatus according to an embodiment of this application;
FIG 12 is a structural diagram of another resource configuration apparatus according to an embodiment of this application; and
FIG 13 is a structural diagram of a network node according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some rather than all of the embodiments of this application. Based on the embodiments of this application, all other embodiments obtained by a person of ordinary skill in the art without creative efforts fall within the protection scope of this application.

Terms "first" and "second" in the specification and claims of this application are used to distinguish between similar objects, and are not used to describe a specific order or sequence. It should be understood that data used in this way may be interchangeable in an appropriate case, so that the embodiments of this application can be implemented in a sequence other than those shown or described herein, and objects distinguished by "first" and "second" are generally of a same type, and a quantity of objects is not limited. For example, there may be one or more first targets. In addition, in the specification and the claims, "and/or" represents at least one of connected objects, and the character "/" generally represents an "or" relationship between associated objects.

It should be noted that the technology described in the embodiments of this application is not limited to a Long Term Evolution (Long Time Evolution, LTE)/LTE-advanced (LTE-Advanced, LTE-A) system, and may also be used in various wireless communication systems, for example, Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application are often used interchangeably. The described technology may be used in the foregoing system and radio technology, and may also be used in another system and radio technology. However, a New Radio (New Radio, NR) system is described below as an example, and the term NR is used in most of the descriptions, although these technologies can also be used in an application other than an application of the NR system, for example, a sixth (6^{th} Generation, 6G) communication system.

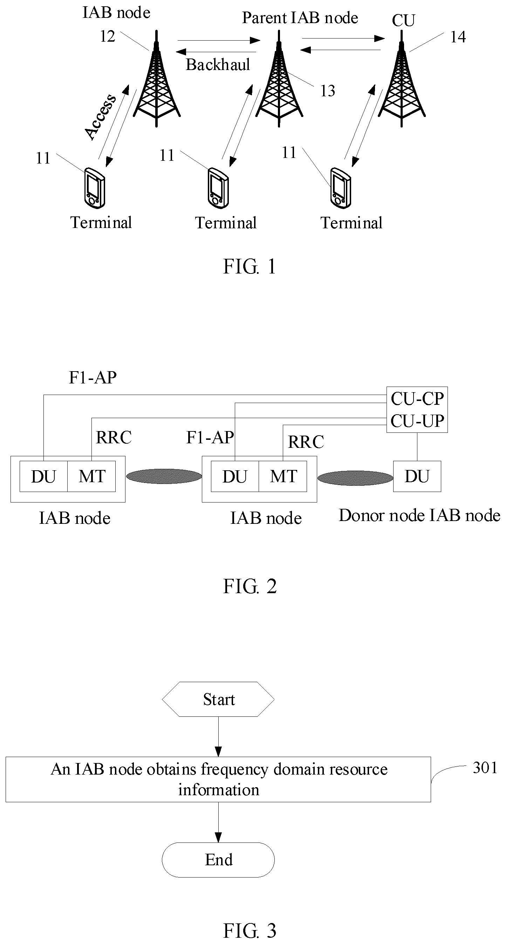

FIG 1 is a schematic diagram of a wireless communication system to which an embodiment of this application is applicable. The wireless communication system includes a terminal 11, an IAB node (IAB node) 12, a parent IAB node (parent IAB node) 13, and a centralized control unit (Centralized Unit, CU) 14.

In the foregoing system, the IAB node 12 may find the parent IAB node 13 by using an MT, and establish a wireless connection to a DU of the parent IAB node 13. The wireless connection is referred to as a backhaul link (backhaul link) of the IAB node 12, and becomes an access link of the parent IAB node 13. After a complete backhaul link is established, the IAB node 12 enables a DU function of the IAB node 12, and the DU provides a cell service, that is, the DU may provide an access service for the terminal 11. DUs of all IAB nodes can be connected to the CU 14.

In addition, as shown in FIG 2, the CU may configure the DU of the IAB node by using an F1 control plane interface (F1-C) (F1 application procedure protocol (F1-AP)) protocol. The CU may configure an MT of the IAB node by using a Radio Resource Control (Radio Resource Control, RRC) protocol. In addition, the CU 14 may be a donor node (Donor IAB node) or a separate network node, and may specifically include a CU-control plane (control plane, CP) and a CU-user plane (user plane, UP).

It should be noted that merely the terminal 11, the IAB node 12, the parent IAB node 13, and the CU 14 are used for description in FIG 1. In actual application, a quantity of IAB nodes is not limited in this embodiment of this application.

The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID) or vehicle user equipment (Vehicle User Equipment, VUE), pedestrian user equipment (Pedestrian User Equipment, PUE), or reduced capacity user equipment (Reduced Capacity User Equipment, RedCap UE). The RedCap UE may include a wearable device, an industrial sensor, a video monitoring device, and the like. The wearable device includes a band, a headset, eyeglasses, and the like. It should be noted that a specific type of the terminal 11 is not limited in this embodiment of this application.

A resource configuration method and apparatus, a network node, and a storage medium provided in the embodiments of this application are described in detail below with reference to the accompanying drawings by using specific embodiments and application scenarios thereof.

FIG 3 is a flowchart of a resource configuration method according to an embodiment of this application. As shown in FIG 3, the method includes the following steps:
Step 301: An IAB node obtains frequency domain resource information.

The frequency domain resource information is used to indicate an available frequency domain resource of a DU of the IAB node.

That the IAB obtains the frequency domain resource information may be: receiving frequency domain resource information configured by a parent node or a CU, or may be: obtaining predefined frequency domain resource information. The parent node of the IAB node is a prior-hop node of the IAB node, or is a node that is N hops prior to the IAB node.

The available frequency domain resource may be a frequency domain resource range of the DU. The frequency domain resource range may include an actual frequency domain resource occupied by actual transmission of the DU, for example, may further include a frequency domain resource that is not occupied by actual transmission of the DU. In other words, the available frequency domain resource may be a selectable frequency domain range of the DU, and the frequency domain range of actual transmission of the DU is a subset of the available frequency domain resource. Alternatively, the available frequency domain resource may be an actual frequency domain resource occupied by actual transmission of the DU.

In addition, the available frequency domain resource may be an available frequency domain resource implicitly or explicitly indicated by the frequency domain resource information.

In this embodiment of this application, the foregoing steps may be used to configure an available frequency domain resource for the DU of the IAB node, thereby improving resource configuration precision. In other words, the available frequency domain resource may be configured in units of the DU, to improve a configuration effect of configuring a resource for the IAB node.

In an optional implementation, the frequency domain resource information includes at least one of the following:
first frequency domain resource information configured by a parent node for the IAB node;
second frequency domain resource information configured by the CU for the IAB node; and
third frequency domain resource information predefined in a protocol.

The parent node may be a previous hop of the IAB node, or may be a node that is N hops before the IAB node, where N is an integer greater than 1, that is, there may be another IAB node between the parent node and the IAB node.

The parent node may configure the frequency domain resource information by using a medium access control control element (Medium access control control element, MAC CE) or downlink control information (Downlink Control Information, DCI) signaling, or may configure the frequency domain resource information by transferring RRC signaling of the CU.

The CU may configure the frequency domain resource information by using F1-C or RRC signaling.

In addition, a resource of a guard frequency domain interval between the MT and the DU of the IAB node may be alternatively defined in a protocol.

In this implementation, the available frequency domain resource may be configured for the DU of the IAB in multiple manners.

Optionally, in a case that the IAB node obtains at least two of the first frequency domain resource information, the second frequency domain resource information, and the third frequency domain resource information, the available frequency domain resource is an available frequency domain resource indicated by frequency domain resource information determined in the at least two items according to first signaling.

The first signaling may be additional indication signaling other than the frequency domain resource information, for example, one piece of signaling configures the frequency domain resource information, and another piece of signaling indicates that one of the at least two items is used to instruct to obtain the available frequency resource by using one of the foregoing at least two items by using the signaling, for example, the frequency domain resource information configured by the parent node, the frequency domain resource information configured by the CU, or the frequency domain resource information predefined in the protocol. For example, one bit or two bits are used for indication.

In an optional implementation, the available frequency domain resource is indicated by the parent node or the CU by using the frequency domain resource information.

The foregoing indication may be a configuration or a dynamic indication. An indication manner may be an explicit or implicit indication.

For example, it indicates that the available frequency domain range of the DU is carrier bandwidth of the DU. For another example, it indicates that frequency domain resources (including all, some, or no) in the carrier bandwidth of the DU are available frequency domain resources of the DU, and in this way, an indication granularity can be less than the carrier bandwidth. For another example, it indicates that a specific carrier or some carriers of the DU are the available frequency domain resource of the DU, and in this way, an indication granularity can be the carrier bandwidth, and dynamic carrier activation or deactivation may be introduced based on carrier configuration, to switch some duplexing modes (duplexing mode) by using a frequency domain indication.

In an optional implementation, the available frequency domain resource is related to at least one of the following:
an available frequency domain range of the DU that is indicated by the frequency domain resource information;
carrier bandwidth of the DU that is indicated by the frequency domain resource information;
carrier bandwidth of a DU of the parent node;
an available frequency domain range of the DU of the parent node;
operating bandwidth of the MT of the IAB node; and
a guard interval.

The operating bandwidth of the MT may be a bandwidth part (Bandwidth part, BWP) of the MT or some frequency domain resources in the BWP of the MT. The BWP of the MT includes one or more BWPs configured by an IAB MT or one or more activated BWPs.

The guard interval may be a guard interval between operating bandwidth of the DU and the operating bandwidth of the MT.

For example, the available frequency domain resource includes at least one of the following:
a remaining frequency domain resource obtained after at least one of the carrier bandwidth of the DU of the parent node and the available frequency range of the DU of the parent node is removed from the available frequency domain range of the DU;
a remaining frequency domain resource obtained after the guard interval and at least one of the carrier bandwidth of the DU of the parent node and the available frequency range of the DU of the parent node are removed from the available frequency domain range of the DU;
a remaining frequency domain resource obtained after the operating bandwidth of the MT of the IAB node is removed from the available frequency domain range of the DU;
a remaining frequency domain resource obtained after the operating bandwidth of the MT of the IAB node and the guard interval are removed from the available frequency domain range of the DU;
a remaining frequency domain resource obtained after at least one of the carrier bandwidth of the DU of the parent node and the available frequency domain range of the DU of the parent node is removed from the carrier bandwidth of the DU;
a remaining frequency domain resource obtained after the guard interval and at least one of the carrier bandwidth of the DU of the parent node and the available frequency domain range of the DU of the parent node are removed from the carrier bandwidth of the DU;
a remaining frequency domain resource obtained after the operating bandwidth of the MT of the IAB node is removed from the carrier bandwidth of the DU; and
a remaining frequency domain resource obtained after the operating bandwidth of the MT of the IAB node and the guard interval are removed from the carrier bandwidth of the DU.

Removing means that some resources are rule out.

The remaining frequency domain resource obtained after at least one of the carrier bandwidth of the DU of the parent node and the available frequency range of the DU of the parent node is removed from the available frequency domain range of the DU may be the available frequency domain range of the DU - the available frequency domain range of the DU of the parent node, or the available frequency domain range of the DU - the carrier bandwidth of the DU of the parent node, or the available frequency domain range of the DU - the available frequency domain range of the parent node - the carrier bandwidth of the DU of the parent node.

The remaining frequency domain resource obtained after the guard interval and at least one of the carrier bandwidth of the DU of the parent node and the available frequency range of the DU of the parent node are removed from the available frequency domain range of the DU may be the available frequency domain range of the DU - the available frequency domain range of the DU of the parent node - the guard interval, or the available frequency domain range of the DU - the carrier bandwidth of the DU of the parent node - the guard interval, or the available frequency domain range of the DU - the available frequency domain range of the parent node - the carrier bandwidth of the DU of the parent node - the guard interval.

It should be noted that for another implementation, reference may also be made to the foregoing descriptions. Details are not listed herein one by one. In addition, if there is no overlapping part between two resources, a rule out operation is not required.

In this implementation, the available frequency domain resource of the DU may be flexibly configured by using at least one of the foregoing items, and interference between the MT and the DU can be further reduced.

In an optional implementation, the available frequency domain resource is in at least one of the following relationships with the operating bandwidth of the MT of the IAB node:
the available frequency domain resource includes a frequency domain resource affected by the operating bandwidth of the MT;
the available frequency domain resource includes the operating bandwidth of the MT;
the available frequency domain resource and the operating bandwidth of the MT have overlapping resources; and
the available frequency domain resource is located within the operating bandwidth of the MT.

The frequency domain resource affected by the operating bandwidth of the MT may be obtained based on fixed operating bandwidth of the MT by using an available frequency domain range of at least one of a physical downlink control channel (Physical downlink control channel, PDCCH), search space, or a physical uplink control channel (Physical uplink control channel, PUCCH) of the DU. Alternatively, the frequency domain resource affected by the operating bandwidth of the MT may be obtained based on actual operating bandwidth (for example, an activated MT BWP) of the MT by using an available frequency domain range of at least one of a physical downlink shared channel (Physical downlink Shared Channel, PDSCH) and a physical uplink shared channel (Physical uplink Shared Channel, PUSCH) of the DU.

That the available frequency domain resource includes the operating bandwidth of the MT may be: The available frequency resource range of the DU includes the operating bandwidth of the MT. That the available frequency domain resource is located within the operating bandwidth of the MT may be: The operating bandwidth/available frequency domain range of the DU is located within the operating bandwidth/available frequency domain range of the MT.

That the available frequency domain resource and the operating bandwidth of the MT have overlapping resources may be:

A resource with a low frequency or a relatively small number of frequency domain resource in the operating bandwidth/available frequency domain range of the DU and a resource with a high frequency or a relatively large number of frequency domain resource in the operating bandwidth/frequency domain range of the MT have overlapping resources; or
a resource with a high frequency or a relatively large number of frequency domain resource in the operating bandwidth/available frequency domain range of the DU and a resource with a low frequency or a relatively small number of frequency domain resource in the operating bandwidth/frequency domain range of the MT have overlapping resources; or
a resource with a low frequency or a relatively small number of frequency domain resource in the operating bandwidth/available frequency domain range of the MT and a resource with a high frequency or a relatively large number of frequency domain resource in the operating bandwidth/available frequency domain range of the DU have overlapping resources; or
a resource with a high frequency or a relatively large number of frequency domain resource in the operating bandwidth/frequency domain range of the MT and a resource with a low frequency or a relatively small number of frequency domain resource in the operating bandwidth/available frequency domain range of the DU have overlapping resources.

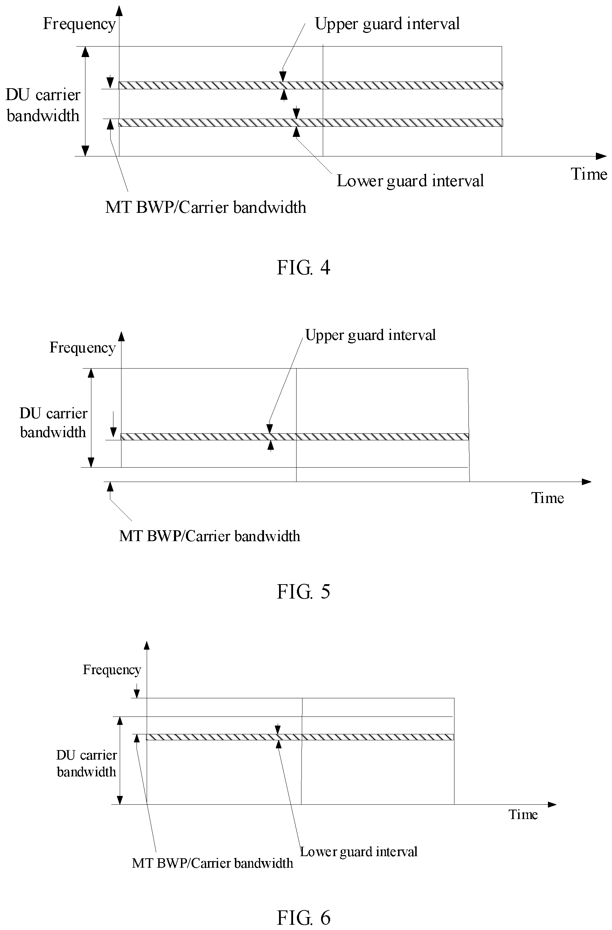

For example, as shown in FIG 4, the available frequency domain range of the DU includes the operating bandwidth of the MT. The guard interval (guard band) may be outside the operating bandwidth of the MT, or may be located within the operating bandwidth of the MT. In FIG 4, as an example, the guard interval is outside the operating bandwidth of the MT.

For another example, as shown in FIG 5, a resource with a low frequency or a relatively small number of frequency domain resource in the operating bandwidth/available frequency domain range of the DU and a resource with a high frequency or a relatively large number of frequency domain resource in the operating bandwidth/frequency domain range of the MT have overlapping resources. The guard interval may be outside the operating bandwidth of the MT, or may be located within the operating bandwidth of the MT. In FIG 5, as an example, the guard interval is outside the operating bandwidth of the MT.

For another example, as shown in FIG 6, a resource with a high frequency or a relatively large number of frequency domain resource in the operating bandwidth/available frequency domain range of the DU and a resource with a low frequency or a relatively small number of frequency domain resource in the operating bandwidth/frequency domain range of the MT have overlapping resources. The guard interval may be outside the operating bandwidth of the MT, or may be located within the operating bandwidth of the MT. In FIG 6, as an example, the guard interval is outside the operating bandwidth of the MT.

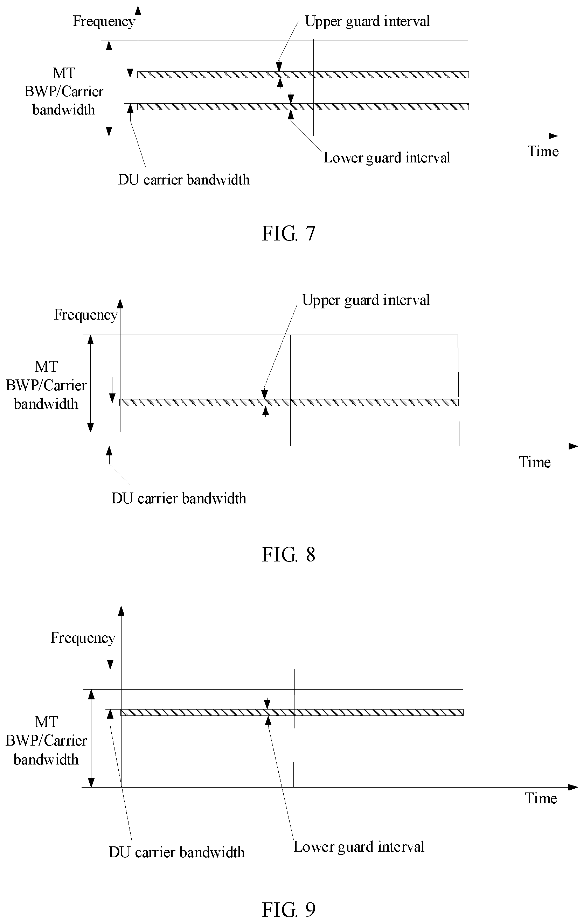

For another example, as shown in FIG 7, the operating bandwidth/available frequency domain range of the DU is within the operating bandwidth/frequency domain range of the MT.

For another example, as shown in FIG 8, a resource with a low frequency or a relatively small number of frequency domain resource in the operating bandwidth/frequency domain range of the MT and a resource with a high frequency or a relatively large number of frequency domain resource in the operating bandwidth/available frequency domain range of the DU have overlapping resources.

For another example, as shown in FIG 9, a resource with a high frequency or a relatively large number of frequency domain resource in the operating bandwidth/frequency domain range of the MT and a resource with a low frequency or a relatively small number of frequency domain resource in the operating bandwidth/available frequency domain range of the DU have overlapping resources.

In an optional implementation, the available frequency domain resource is related to a multiplexing manner of the IAB node.

The multiplexing manner includes frequency division multiplexing (Frequency Division Multiplexing, FDM), space division multiplexing (Space Division Multiplex, SDM), and time division multiplexing (Time Division Multiplexing, TDM).

In addition, a manner of obtaining the frequency domain resource information may also be related to the multiplexing manner.

In this implementation, FDM, SDM, or TDM multiplexing is implemented by using the available frequency domain resource.

For example, when FDM multiplexing is supported, the IAB node does not expect an available frequency domain range of an IAB DU to overlap operating bandwidth of an IAB MT. In other words, an available frequency domain resource of an IAB DU that is configured by the CU/parent node does not overlap the operating bandwidth of the IAB MT. Specifically, FDM multiplexing may be implemented in an explicit or implicit configuration manner described above.

For example, when SDM multiplexing is supported, an available frequency domain range of the IAB DU may overlap the operating bandwidth of the IAB MT. The DU and the MT are multiplexed on the overlapping frequency domain resource. In addition, additional indication signaling may be used to indicate whether the DU can use an overlapping part. If it is indicated that the DU cannot use the overlapping part, the DU and the MT are switched back to FDM resource multiplexing; or otherwise, SDM resource multiplexing is used. Alternatively, it is indicated that the DU can use some resources in overlapping resources.

In an implementation, the IAB node may report whether the IAB DU uses a part in which the available frequency domain range of the IAB DU entirely overlaps the operating bandwidth of the IAB MT, or uses some resources in the overlapping resources, so that the parent node or the CU determines whether SDM multiplexing actually exists in the overlapping part, to assist the parent node or the CU in resource management or scheduling.

Optionally, in a case that the IAB node supports FDM, the frequency domain resource information is further used to indicate that the available frequency domain resource can be used as an FDM multiplexing resource.

In this implementation, the available frequency domain resource may be indicated as an FDM multiplexing resource. In this way, before the available frequency domain resource of the IAB DU overlaps with the operating bandwidth of the IAB MT, potential SDM multiplexing is indicated in advance to prepare for switching of a bandwidth part (Bandwidth part, BWP), to improve switching efficiency.

Optionally, in a case that the IAB node supports SDM, the frequency domain resource information is further used to indicate that the available frequency domain resource can be used as an SDM multiplexing resource.

The available frequency domain resource may be indicated as an SDM multiplexing resource. In this way, before the available frequency domain resource of the IAB DU overlaps with the operating bandwidth of the IAB MT, potential SDM multiplexing is indicated in advance to prepare for switching of a BWP, to improve switching efficiency.

In an optional implementation, the method further includes:
reporting, by the IAB node, expected information to a parent node or a CU, where the expected information includes at least one of the following:
an expected multiplexing manner and a frequency domain resource corresponding to at least one multiplexing manner.

The expected multiplexing manner may be FDM or SDM, or may be TDM.

The frequency domain resource corresponding to the at least one multiplexing manner may be at least one of a size and a location of a frequency domain resource corresponding to each multiplexing manner.

In this implementation, because the expected information is reported, finally obtained resource configuration information can be easily matched with the expectation, to finally improve operating performance of the IAB node.

In addition, in this embodiment of this application, the CU may notify the IAB node of the multiplexing manner, for example, directly notify the IAB node, or notify the IAB node by using the parent node.

In an optional implementation, the available frequency domain resource is related to a duplexing manner of the IAB node, and the duplexing manner includes a duplexing manner supported by a DU cell of the IAB node, or a duplexing manner between a DU cell of the IAB node and at least one MT serving cell (MT serving cell).

In this embodiment of this application, the MT may support dual connectivity, for example, multiple MT cells correspond to one DU cell. The duplexing manner between the DU cell and the at least one MT serving cell may be that, when the DU cell corresponds to the MT serving cell, different duplexing manners are used, and available frequency domain resources of different DUs may be configured.

Optionally, available frequency domain resources related to different duplexing manners are independently obtained.

In this implementation, for different duplexing manners, available frequency domain resources of the DU may be independently obtained or notified. It should be noted that different duplexing manners herein do not refer to all duplexing manners, because in some scenarios, there may be a case that it is not necessary to obtain or notify the available frequency domain range in some duplexing manners.

Optionally, the multiplexing manner of the DU of the IAB and the MT is related to the duplexing manner.

The foregoing "related" may include at least one of the following:
When MT transmit (an MT transmit port (Transmit X, TX)) and DU transmit (DU TX) occur at the same time or simultaneous occurrence of MT TX and DU TX is supported, a frequency domain resource of the MT TX and a frequency domain resource of the DU TX may overlap. That simultaneous transmitting of the MT and the DU does not require that the MT and the DU to simultaneously transmit signals, and simultaneous occurrence may mean that it is required to exist simultaneously at a same moment in actual scheduling.

When MT receive (an MT receive port (Receive X, RX)) and DU receive (DU RX) occur at the same time or simultaneous occurrence of MT RX and DU RX is supported, a frequency domain resource of the MT RX and a frequency domain resource of the DU RX may overlap.

When MT TX and DU RX occur at the same time or simultaneous occurrence of MT TX and DU RX is supported, a frequency domain resource of the MT TX and a frequency domain resource of the DU RX may overlap, and in this case, the IAB node supports full duplexing by default. Alternatively, the frequency domain resource of the MT TX does not overlap the frequency domain resource of the DU RX, and in this case, the IAB node does not support full duplexing by default.

When MT RX and DU TX occur at the same time or simultaneous occurrence of MT RX and DU TX is supported, a frequency domain resource of the MT RX and a frequency domain resource of the DU TX may overlap, and in this case, the IAB node supports full duplexing by default. Alternatively, the frequency domain resource of the MT RX does not overlap the frequency domain resource of the DU TX, and in this case, the IAB node does not support full duplexing by default.

If the IAB node supports full duplexing (or both simultaneous occurrence of MT TX and DU RX is supported, or simultaneous occurrence of MT RX and DU TX is supported), a frequency domain range of the IAB DU may overlap a frequency domain range of the IAB MT.

In an optional implementation, the method further includes at least one of the following:
reporting, by the IAB node, the available frequency domain resource to a parent node; and
reporting, by the IAB node, a manner of obtaining the frequency domain resource information to the parent node.

The foregoing obtaining manner may also be understood as a notification manner in which the parent node or the CU notifies the frequency domain resource information.

In this implementation, because at least one of the available frequency domain resource and the obtaining manner is reported to the parent node, the parent node may control, according to the available frequency domain range of the IAB DU, at least one of the BWP and resource scheduling of the IAB MT, to implement FDM and SDM multiplexing manners between the MT and the DU, or ensure that a frequency domain resource interval used by the DU and the MT meets the guard interval.

In an implementation, the CU may notify the parent node of an available frequency domain range of the DU of the IAB node, and/or may notify the parent node of an obtaining manner/a notification manner of the available frequency domain range of the IAB DU. In this implementation, the parent node may also control, according to the available frequency domain range of the IAB DU, at least one of the BWP and resource scheduling of the IAB MT, to implement FDM and SDM multiplexing manners between the MT and the DU, or ensure that a frequency domain resource interval used by the DU and the MT meets the guard interval.

In an optional implementation, in a case that the DU of the parent node does not schedule a frequency domain resource, the available frequency domain resource is independently determined by the IAB node.

In this implementation, when the parent node (for example, an IAB-DU of the parent node) does not schedule some frequency domain resources, the IAB node may independently determine that these frequency domain resources are applicable, so that transmission overheads can be reduced. For example, the IAB node determines, according to a sequence number of a maximum or minimum physical resource block (Physical Resource Block, PRB) recently scheduled by the parent node, a frequency domain range scheduled by the parent node in a future period of time, and the IAB node may schedule a remaining frequency domain range that uses the carrier.

In an optional implementation, the frequency domain resource information includes scheduling of the parent node.

The foregoing scheduling may be scheduling for the MT of the IAB node, or may be scheduling for the DU of the IAB node.

In this implementation, the available frequency domain resource of the DU may be configured for the IAB node by using scheduling of the parent node.

In an optional implementation,
an available frequency domain resource on a symbol corresponding to at least one of a PDCCH, search space, a control resource set, and a PUCCH that is configured by the CU by using F1-C signaling and that is of the DU of the IAB node on the MT of the IAB node is obtained based on specific fixed operating bandwidth of the MT; or
an available frequency domain resource on a symbol corresponding to at least one of a PDSCH and a PUSCH that is configured by the parent node by using DCI signaling and that is of the DU of the IAB node on the MT of the IAB node is obtained based on actual operating bandwidth of the MT; or
an available frequency domain resource of the DU of the IAB node on a symbol other than a symbol corresponding to a PDCCH, search space, a control resource set, and a PUCCH that are configured by the parent node by using DCI signaling is obtained based on actual operating bandwidth of the MT.

In an optional implementation, the frequency domain resource information includes first scheduling performed by the parent node on the MT of the IAB node, and the available frequency domain resource is determined based on the first scheduling.

In this implementation, the available frequency domain resource of the DU may be determined according to scheduling of the MT. For example, the available frequency domain range of the DU of the IAB node is implicitly indicated by using a PDCCH (for example, DCI) of a PDSCH or a PUSCH that schedules the MT. In a manner, a reserved bit in the PDCCH may be redefined for indication. If the indication is to set a bit, a frequency domain range that is not scheduled by the parent node in a future period of time may be determined as an available frequency domain resource of the DU according to a frequency domain range scheduled by the PDCCH. Alternatively, a predefined code point or code point combination is represented as bit setting. If the indication is a predefined code point or code point combination, a frequency domain range that is not scheduled by the parent node in a future period of time may be determined as an available frequency domain resource according to a frequency domain range scheduled by the PDCCH.

In this implementation, because the frequency domain resource information includes the first scheduling performed by the parent node on the MT of the IAB node, the available frequency domain resource does not need to be determined by using additional signaling, thereby reducing transmission overheads.

Optionally, the available frequency domain resource includes:
a first available frequency domain resource determined based on a frequency domain range center of the first scheduling; or
a second available frequency domain resource determined based on a frequency domain range of the first scheduling.

In an implementation, in a case that a distance between the frequency domain range center and a lowest frequency domain resource of a bandwidth part BWP of the MT is less than a distance between the frequency domain range center and a highest frequency domain resource of the BWP, the first available frequency domain resource includes or belongs to a frequency domain resource between the highest frequency domain resource of the BWP and an upper boundary of the frequency domain range.

That the first available frequency domain resource includes a frequency domain resource between the highest frequency domain resource of the BWP and the upper boundary of the frequency domain range indicates that a range of the first available frequency domain resource is greater than or equal to the frequency domain resource between the highest frequency domain resource of the BWP and the upper boundary of the frequency domain range. That the first available frequency domain resource belongs to a frequency domain resource between the highest frequency domain resource of the BWP and the upper boundary of the frequency domain range indicates that a range of the first available frequency domain resource is less than or equal to the frequency domain resource between the highest frequency domain resource of the BWP and the upper boundary of the frequency domain range.

In an implementation, in a case that a distance between the frequency domain range center and a highest frequency domain resource of a bandwidth part BWP of the MT is less than a distance between the frequency domain range center and a lowest frequency domain resource of the BWP, the first available frequency domain resource includes or belongs to a frequency domain resource between the lowest frequency domain resource of the BWP and a lower boundary of the frequency domain range. That the first available frequency domain resource includes a frequency domain resource between the lowest frequency domain resource of the BWP and the lower boundary of the frequency domain range indicates that a range of the first available frequency domain resource is greater than or equal to the frequency domain resource between the lowest frequency domain resource of the BWP and the lower boundary of the frequency domain range. That the first available frequency domain resource belongs to a frequency domain resource between the lowest frequency domain resource of the BWP and the lower boundary of the frequency domain range indicates that a range of the first available frequency domain resource is less than or equal to the frequency domain resource between the lowest frequency domain resource of the BWP and the lower boundary of the frequency domain range.

In an implementation, the second available frequency domain resource includes a frequency domain resource outside the frequency domain range.

For example, if the frequency domain range center PRB scheduled by the IAB-DU of the parent node is closer to the lowest frequency domain resource of the BWP of the MT, it is determined that the parent IAB-DU does not use a frequency domain range from the highest frequency domain resource of the BWP of the MT to the upper boundary of the scheduled frequency domain range for a future period of time, and therefore, the first available frequency resource is determined as including or belonging to the frequency domain range.

For example, if the frequency domain range center PRB scheduled by the IAB-DU of the parent node is closer to the highest frequency domain resource of the BWP of the MT, it is determined that the parent IAB-DU does not use a frequency domain range from the lowest frequency domain resource of the BWP of the MT to the lower boundary of the scheduled frequency domain range for a future period of time, and therefore, the second available frequency resource is determined as including or belonging to the frequency domain range.

For another example, the DU of the IAB node may use a frequency domain resource outside the frequency domain range scheduled by the IAB-DU of the parent node.

In an optional implementation, the frequency domain resource information includes second scheduling performed by the parent node on the MT of the IAB node, and the available frequency domain resource is determined based on the second scheduling.

In this implementation, the available frequency domain resource may be configured for the DU of the IAB node through scheduling, for example, a PDSCH or a PUSCH of the scheduled MT that is sent by the parent node. Such scheduling transmission is used to reserve only a frequency domain resource range of the DU of the parent IAB node.

In an optional implementation, effective time of the available frequency domain resource is configured by the CU or the parent node.

In this implementation, configuring the available frequency domain resource takes effect only within the effective time, to further enhance control over the available frequency domain resource of the DU.

Optionally, the CU or the parent node configures the effective time by using at least one of the following indication parameters:
a period indication, a time domain offset, and a time domain resource size.

For example, the CU or the parent node may send at least one of the foregoing indication parameters to the IAB node to configure the effective time. The indication parameters may be specifically configured by using at least one of F1-C signaling, RRC signaling, Backhaul Adaptation Protocol control packet data unit (Backhaul Adaptation Protocol control packet data unit, BAP control PDU), and DCI. In addition, an indication granularity may be M slots, N symbols, L milliseconds, K subframes, A frames, or the like, where M, N, L, K, and A≥ 1.

In addition, in this embodiment of this application, effective time of at least one of the operating bandwidth of the MT of the IAB node and the guard band of the IAB node may be further configured.

Optionally, in a case that the available frequency domain resource is independently configured in a first duplexing manner, the available frequency domain resource is valid only in time that is in the effective time and in which the first duplexing manner is used.

The first duplexing manner may be a predefined duplexing manner, which is not limited.

In this implementation, the available frequency domain resource is effective only when the IAB node works in the first duplexing manner, to further enhance control over the available frequency domain resource of the DU.

In an optional implementation, the time-frequency resource of the IAB is unavailable in a case that at least one of a time domain indication and a frequency domain indication indicates that the time-frequency resource is unavailable, or the time-frequency resource of the IAB is available in a case that at least one of a time domain indication and a frequency domain indication indicates that the time-frequency resource is available.

The time-frequency resource may be a set of a time domain resource and a frequency domain resource.

That the time-frequency resource of the IAB is unavailable in a case that at least one of the time domain indication and the frequency domain indication indicates that the time-frequency resource is unavailable may be as follows:

For the time-frequency resource, if both the time domain indication and the frequency domain indication indicate that the resource is unavailable, the resource is unavailable; or
for the time-frequency resource, if either of the time domain indication and the frequency domain indication indicates that the resource is unavailable, the resource is unavailable.

That the time-frequency resource of the IAB is available in a case that at least one of the time domain indication and the frequency domain indication indicates that the time-frequency resource is available may be as follows:

For the time-frequency resource, if the time domain indication and the frequency domain indication indicate that the resource is available, the resource is available; or
for the time-frequency resource, if either of the time domain indication and the frequency domain indication indicates that the resource is available, the resource is available.

In this implementation, that the time domain resource is available or unavailable is configured in the foregoing manner, so that the time-frequency domain resource can be flexibly indicated.

Configuration signaling for configuring an available frequency domain resource of the DU of the IAB node is described below by using the following example:
The CU may configure the frequency domain resource information by using F1-C or RRC signaling.

In one manner, that the CU configures the available frequency domain resource for the DU by using F1-C signaling may be specifically as follows: The F1-C signaling may explicitly configure a frequency domain start location and a frequency domain resource length indication. For example, the F1-C signaling may include the following configuration:

Frequency configuration item:
> Starting PRBs
> Number of PRBs
Frequency configuration item refers to a frequency configuration item;
Starting PRBs is a frequency domain start location;

Number of PRBs is a frequency domain resource length indication.

In another manner, the F1-C signaling may include the following configuration:
Frequency configuration item:
> BW ENUMERATED (BwofCarrier, BwofparentDU, BwofBWP)
BW is a bandwidth (Bandwidth, BW), and BwofCarrier refers to carrier bandwidth;
BwofparentDU refers to bandwidth of the DU of the parent IAB node;
BwofBWP refers to bandwidth of the MT of the IAB node.

In this manner, a relationship between an available frequency domain resource of a DU semi-statically configured by the CU and another bandwidth may be used.

In another manner, the CU may select to explicitly configure or implicitly configure the frequency domain start location and the frequency domain resource length indication, and the F1-C signaling may include the following configuration:

Frequency configuration item:
> choice frequency configuration
>>Explicit Format
>>> Starting PRBs
>>> Number of PRBs
>>Implicit Format
>>> BW ENUMERATED (BwofCarrier, BwofparentDU, BwofBWP).
choice frequency configuration is a chosen frequency configuration; Explicit Format is a chosen format; Starting PRBs is a frequency domain start location; Number of PRBs is a frequency domain resource length indication; Implicit Format is an implicit format.

In another manner, the CU may configure an available frequency domain resource related to the multiplexing manner, and signaling may include the following configuration:
Frequency configuration item:

| | | |
|---|---|---|
| > FDM | ENUMERATED | (BW1, BW2, BW3) |
| > SDM | ENUMERATED | (BW1, BW2, BW3) |
| > TDM | ENUMERATED | (BW1, BW2, BW3) |

BW1 is configured first frequency domain resource bandwidth; the frequency domain resource bandwidth may include at least one of carrier bandwidth, bandwidth of the DU of the parent IAB node, and BWP ranges of the IAB and the MT. The available frequency domain resource of the DU of the IAB may be carrier bandwidth - bandwidth of a parent IAB DU. Alternatively, the available frequency domain resource of the DU of the IAB may be carrier bandwidth - bandwidth of a parent IAB DU - N; carrier bandwidth - bandwidth of an IAB MT BWP. Alternatively, the available frequency domain resource of the DU of the IAB may be one of carrier bandwidth - bandwidth of an IAB MT BWP - N, where N is a guard interval.

BW2 is configured second frequency domain resource bandwidth; the frequency domain resource bandwidth may include at least one of carrier bandwidth, bandwidth of the DU of the parent IAB node, and a BWP range of the MT of the IAB node. The available frequency domain resource of the DU of the IAB may be carrier bandwidth - bandwidth of a parent IAB DU. Alternatively, the available frequency domain resource of the DU of the IAB may be one of the following: carrier bandwidth - bandwidth of a parent IAB DU; carrier bandwidth - bandwidth of an IAB MT BWP; and carrier bandwidth - bandwidth of an IAB MT BWP - N.

BW3 is configured third frequency domain resource bandwidth; the frequency domain resource bandwidth may include at least one of carrier bandwidth, bandwidth of the DU of the parent IAB node, and a BWP range of the MT of the IAB node. The available frequency domain resource of the DU of the IAB may be carrier bandwidth - bandwidth of a parent IAB DU. Alternatively, the available frequency domain resource of the DU of the IAB may be carrier bandwidth - bandwidth of a parent IAB DU - N; carrier bandwidth - bandwidth of an IAB MT BWP. Alternatively, the available frequency domain resource of the DU of the IAB may be one of carrier bandwidth - bandwidth of an IAB MT BWP - N.

It should be noted that configurations of the BW1, the BW2, and the BW3 may be the same or different, which is not limited.

It should be noted that, three bandwidth parameters are used as an example above, and it is not limited to three optional bandwidth configurations. An actually optional quantity is an integer greater than or equal to 1.

In another manner, the CU may configure an available frequency domain resource related to the duplexing manner. For example, a duplexing information unit (multiplexing info IE) of signaling includes the following configuration:
IAB-MT Cell List:

| | |
|---|---|
| > IAB-MT Cell Item | |
| >> NR Cell Identity | |
| >>DU_RX/MT_RX | |
| >>> frequency info | ENUMERATED (BW1, BW2, BW3, BW4) |
| >>DU_TX/MT_TX | |
| >>> frequency info | ENUMERATED (BW1, BW2, BW3, BW4) |
| >>DU_TX/MT_RX | |
| >>> frequency info | ENUMERATED (BW1, BW2, BW3, BW4) |
| >>DU_RX/MT_TX | |
| >>> frequency info | ENUMERATED (BW1, BW2, BW3, BW4) |

IAB-MT Cell List refers to an IAB-MT cell list; NR Cell Identity is an NR cell identity; Frequency info is frequency information.

BW1, BW2, BW3, and BW4 are optional, and may include at least one of carrier bandwidth, bandwidth of the DU of the parent IAB node, and a BWP range of the MT of the IAB node. The available frequency domain resource of the DU of the IAB may be carrier bandwidth - bandwidth of a parent IAB DU. Alternatively, the available frequency domain resource of the DU of the IAB may be carrier bandwidth - bandwidth of a parent IAB DU - N. Alternatively, the available frequency domain resource of the DU of the IAB may be carrier bandwidth - bandwidth of an IAB MT BWP. Alternatively, the available frequency domain resource of the DU of the IAB may be carrier bandwidth - bandwidth of an IAB MT BWP - N.

It should be noted that CU configuration is used as an example above for description. In this embodiment of this application, the parent node may also refer to DU configuration in which the signaling is an IAB node to configure the available frequency domain resource.

In the embodiments of this application, an IAB node obtains frequency domain resource information, where the frequency domain resource information is used to indicate an available frequency domain resource of a DU of the IAB node. In this way, a frequency domain resource may be allocated to the DU, thereby improving resource configuration precision, and further improving a resource configuration effect for the IAB node.

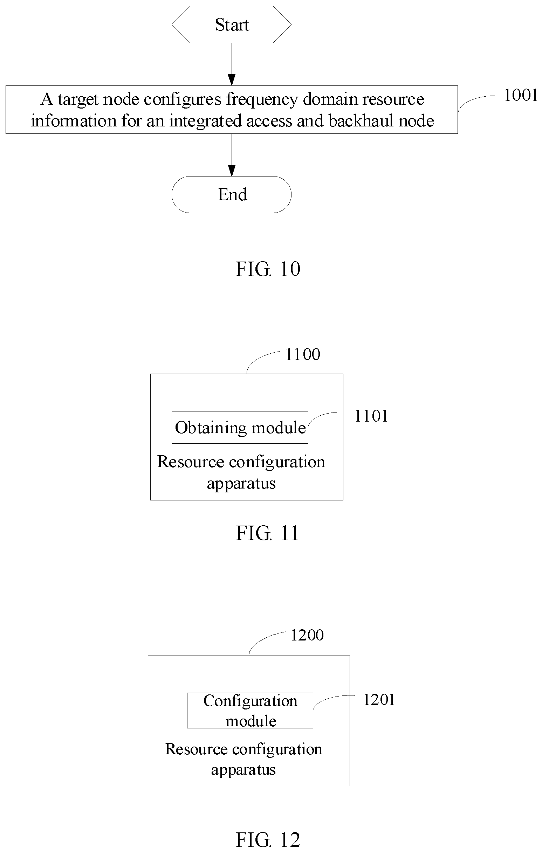

FIG 10 is a flowchart of another resource configuration method according to an embodiment of this application. As shown in FIG 10, the method includes the following steps:
Step 1001: A target node configures frequency domain resource information for an integrated access backhaul IAB node.

The frequency domain resource information is used to indicate an available frequency domain resource of a distributed unit DU of the IAB node, and the target node is a centralized control unit CU or a parent node of the IAB node.

Optionally, the available frequency domain resource is indicated by a parent node or a CU by using the frequency domain resource information.

Optionally, the available frequency domain resource is related to at least one of the following:
an available frequency domain range of the DU that is indicated by the frequency domain resource information;
carrier bandwidth of the DU that is indicated by the frequency domain resource information;
carrier bandwidth of a DU of the parent node;
an available frequency domain range of the DU of the parent node;
operating bandwidth of a mobile node MT of the IAB node; and
a guard interval.

Optionally, the available frequency domain resource includes at least one of the following:
a remaining frequency domain resource obtained after at least one of the carrier bandwidth of the DU of the parent node and the available frequency range of the DU of the parent node is removed from the available frequency domain range of the DU;
a remaining frequency domain resource obtained after the guard interval and at least one of the carrier bandwidth of the DU of the parent node and the available frequency range of the DU of the parent node are removed from the available frequency domain range of the DU;
a remaining frequency domain resource obtained after the operating bandwidth of the MT of the IAB node is removed from the available frequency domain range of the DU;
a remaining frequency domain resource obtained after the operating bandwidth of the MT of the IAB node and the guard interval are removed from the available frequency domain range of the DU;
a remaining frequency domain resource obtained after at least one of the carrier bandwidth of the DU of the parent node and the available frequency domain range of the DU of the parent node is removed from the carrier bandwidth of the DU;
a remaining frequency domain resource obtained after the guard interval and at least one of the carrier bandwidth of the DU of the parent node and the available frequency domain range of the DU of the parent node are removed from the carrier bandwidth of the DU;
a remaining frequency domain resource obtained after the operating bandwidth of the MT of the IAB node is removed from the carrier bandwidth of the DU; and
a remaining frequency domain resource obtained after the operating bandwidth of the MT of the IAB node and the guard interval are removed from the carrier bandwidth of the DU.

Optionally, the available frequency domain resource is in at least one of the following relationships with the operating bandwidth of the MT of the IAB node:
the available frequency domain resource includes a frequency domain resource affected by the operating bandwidth of the MT;
the available frequency domain resource includes the operating bandwidth of the MT;
the available frequency domain resource and the operating bandwidth of the MT have overlapping resources; and
the available frequency domain resource is located within the operating bandwidth of the MT.

Optionally, the available frequency domain resource is related to a multiplexing manner of the IAB node.

Optionally, in a case that the IAB node supports spatial multiplexing FDM, the frequency domain resource information is further used to indicate that the available frequency domain resource can be used as an FDM multiplexing resource; or
in a case that the IAB node supports spatial multiplexing SDM, the frequency domain resource information is further used to indicate that the available frequency domain resource can be used as an SDM multiplexing resource.

Optionally, the method further includes:
receiving, by the target node, expected information reported by the IAB node, where the expected information includes at least one of the following:
an expected multiplexing manner and a frequency domain resource corresponding to at least one multiplexing manner.

Optionally, the available frequency domain resource is related to a duplexing manner of the IAB node, and the duplexing manner includes a duplexing manner supported by a DU cell of the IAB node, or a duplexing manner between a DU cell of the IAB node and at least one MT serving cell.

Optionally, available frequency domain resources related to different duplexing manners are independently obtained; and/or
a multiplexing manner of the DU of the IAB and the MT is related to the duplexing manner.

Optionally, the method further includes at least one of the following:
receiving, by the target node, the available frequency domain resource reported by the IAB node; and
receiving, by the target node, a manner of obtaining the frequency domain resource information reported by the IAB node.

Optionally, the frequency domain resource information includes scheduling of the target node.

Optionally, the frequency domain resource information includes first scheduling performed by the MT of the IAB node, and the available frequency domain resource is determined based on the first scheduling; or
the frequency domain resource information includes second scheduling performed by a parent node on a DU of the IAB node, and the available frequency domain resource is determined based on the second scheduling.

Optionally, the available frequency domain resource includes:
a first available frequency domain resource determined based on a frequency domain range center of the first scheduling; or
a second available frequency domain resource determined based on a frequency domain range of the first scheduling.

Optionally, in a case that a distance between the frequency domain range center and a lowest frequency domain resource of a bandwidth part BWP of the MT is less than a distance between the frequency domain range center and a highest frequency domain resource of the BWP, the first available frequency domain resource includes or belongs to a frequency domain resource between the highest frequency domain resource of the BWP and an upper boundary of the frequency domain range; or
in a case that a distance between the frequency domain range center and a highest frequency domain resource of a bandwidth part BWP of the MT is less than a distance between the frequency domain range center and a lowest frequency domain resource of the BWP, the first available frequency domain resource includes or belongs to a frequency domain resource between the lowest frequency domain resource of the BWP and a lower boundary of the frequency domain range;
   or
the second available frequency domain resource includes a frequency domain resource outside the frequency domain range.

Optionally, effective time of the available frequency domain resource is configured by the target node.

Optionally, the target node configures the effective time by using at least one of the following indication parameters:
a period indication, a time domain offset, and a time domain resource size.

Optionally, in a case that the available frequency domain resource is independently configured in a first duplexing manner, the available frequency domain resource is valid only in time that is in the effective time and in which the first duplexing manner is used.

It should be noted that this embodiment is used as an implementation of a target node side corresponding to the embodiment shown in FIG 3. For a specific implementation of this embodiment, reference may be made to related descriptions of the embodiment shown in FIG 3. To avoid repetition, details are not described in this embodiment. In this embodiment, a configuration effect of configuring a resource for the IAB node can also be improved.

FIG 11 is a structural diagram of a resource configuration apparatus according to an embodiment of the present invention. As shown in FIG 11, a resource configuration apparatus 1100 includes:
an obtaining module 1101, configured to obtain frequency domain resource information; where
the frequency domain resource information is used to indicate an available frequency domain resource of a distributed unit DU of the IAB node.

Optionally, the frequency domain resource information includes at least one of the following:
first frequency domain resource information configured by a parent node for the IAB node;
second frequency domain resource information configured by a centralized control unit CU for the IAB node; and
third frequency domain resource information predefined in a protocol.

Optionally, in a case that the IAB node obtains at least two of the first frequency domain resource information, the second frequency domain resource information, and the third frequency domain resource information, the available frequency domain resource is an available frequency domain resource indicated by frequency domain resource information determined in the at least two items according to first signaling.

Optionally, the available frequency domain resource is indicated by a parent node or a CU by using the frequency domain resource information.

Optionally, the available frequency domain resource is related to at least one of the following:
an available frequency domain range of the DU that is indicated by the frequency domain resource information;
carrier bandwidth of the DU that is indicated by the frequency domain resource information;
carrier bandwidth of a DU of the parent node;
an available frequency domain range of the DU of the parent node;
operating bandwidth of a mobile termination MT of the IAB node; and
a guard interval.

Optionally, the available frequency domain resource includes at least one of the following:
a remaining frequency domain resource obtained after at least one of the carrier bandwidth of the DU of the parent node and the available frequency range of the DU of the parent node is removed from the available frequency domain range of the DU;
a remaining frequency domain resource obtained after the guard interval and at least one of the carrier bandwidth of the DU of the parent node and the available frequency range of the DU of the parent node are removed from the available frequency domain range of the DU;
a remaining frequency domain resource obtained after the operating bandwidth of the MT of the IAB node is removed from the available frequency domain range of the DU;
a remaining frequency domain resource obtained after the operating bandwidth of the MT of the IAB node and the guard interval are removed from the available frequency domain range of the DU;
a remaining frequency domain resource obtained after at least one of the carrier bandwidth of the DU of the parent node and the available frequency domain range of the DU of the parent node is removed from the carrier bandwidth of the DU;
a remaining frequency domain resource obtained after the guard interval and at least one of the carrier bandwidth of the DU of the parent node and the available frequency domain range of the DU of the parent node are removed from the carrier bandwidth of the DU;
a remaining frequency domain resource obtained after the operating bandwidth of the MT of the IAB node is removed from the carrier bandwidth of the DU; and
a remaining frequency domain resource obtained after the operating bandwidth of the MT of the IAB node and the guard interval are removed from the carrier bandwidth of the DU.

Optionally, the available frequency domain resource is in at least one of the following relationships with the operating bandwidth of the MT of the IAB node:
the available frequency domain resource includes a frequency domain resource affected by the operating bandwidth of the MT;
the available frequency domain resource includes the operating bandwidth of the MT;
the available frequency domain resource and the operating bandwidth of the MT have overlapping resources; and
the available frequency domain resource is located within the operating bandwidth of the MT.

Optionally, the available frequency domain resource is related to a multiplexing manner of the IAB node.

Optionally, in a case that the IAB node supports spatial multiplexing FDM, the frequency domain resource information is further used to indicate that the available frequency domain resource can be used as an FDM multiplexing resource; or
in a case that the IAB node supports spatial multiplexing SDM, the frequency domain resource information is further used to indicate that the available frequency domain resource can be used as an SDM multiplexing resource.

Optionally, the apparatus further includes:
a first reporting module, configured to report expected information to the parent node or the CU, where the expected information includes at least one of the following:
an expected multiplexing manner and a frequency domain resource corresponding to at least one multiplexing manner.

Optionally, the available frequency domain resource is related to a duplexing manner of the IAB node, and the duplexing manner includes a duplexing manner supported by a DU cell of the IAB node, or a duplexing manner between a DU cell of the IAB node and at least one MT serving cell.

Optionally, available frequency domain resources related to different duplexing manners are independently obtained; and/or
a multiplexing manner of the DU of the IAB and the MT is related to the duplexing manner.

Optionally, the apparatus further includes at least one of the following:
a second reporting module, configured to report the available frequency domain resource to the parent node; and
a third reporting module, configured to report a manner of obtaining the frequency domain resource information to the parent node.

Optionally, in a case that the DU of the parent node does not schedule a frequency domain resource, the available frequency domain resource is independently determined by the IAB node; or
the frequency domain resource information includes scheduling of a parent node.

Optionally, the frequency domain resource information includes first scheduling performed by the MT of the IAB node, and the available frequency domain resource is determined based on the first scheduling; or
the frequency domain resource information includes second scheduling performed by a parent node on a DU of the IAB node, and the available frequency domain resource is determined based on the second scheduling.

Optionally, the available frequency domain resource includes:
a first available frequency domain resource determined based on a frequency domain range center of the first scheduling; or
a second available frequency domain resource determined based on a frequency domain range of the first scheduling.

Optionally, in a case that a distance between the frequency domain range center and a lowest frequency domain resource of a bandwidth part BWP of the MT is less than a distance between the frequency domain range center and a highest frequency domain resource of the BWP, the first available frequency domain resource includes or belongs to a frequency domain resource between the highest frequency domain resource of the BWP and an upper boundary of the frequency domain range; or
in a case that a distance between the frequency domain range center and a highest frequency domain resource of a bandwidth part BWP of the MT is less than a distance between the frequency domain range center and a lowest frequency domain resource of the BWP, the first available frequency domain resource includes or belongs to a frequency domain resource between the lowest frequency domain resource of the BWP and a lower boundary of the frequency domain range; or
the second available frequency domain resource includes a frequency domain resource outside the frequency domain range.

Optionally, effective time of the available frequency domain resource is configured by the CU or the parent node.

Optionally, the CU or the parent node configures the effective time by using at least one of the following indication parameters:
a period indication, a time domain offset, and a time domain resource size.

Optionally, in a case that the available frequency domain resource is independently configured in a first duplexing manner, the available frequency domain resource is valid only in time that is in the effective time and in which the first duplexing manner is used.

Optionally, in a case that a time-frequency resource of the IAB is not available in a time-frequency resource indicated by at least one of a time domain indication and a frequency domain indication, the time-frequency resource is not available; or
in a case that a time-frequency resource of the IAB is available in a time-frequency resource indicated by at least one of a time domain indication and a frequency domain indication, the time-frequency resource is available.

The resource configuration apparatus provided in this embodiment of this application can implement processes in the method embodiment of FIG 3. To avoid repetition, details are not described herein again, and a configuration effect of configuring a resource for the IAB node can be improved.

It should be noted that the resource configuration apparatus in this embodiment of this application may be an apparatus, or may be a component, an integrated circuit, or a chip in an IAB node.

FIG 12 is a structural diagram of another resource configuration apparatus according to an embodiment of the present invention. As shown in FIG 12, a resource configuration apparatus 1200 includes:
a configuration module 1201, configured to configure frequency domain resource information for an IAB node; where
the frequency domain resource information is used to indicate an available frequency domain resource of a DU of the IAB node, a target node includes the apparatus, and the target node is a CU or a parent node of the IAB node.

Optionally, the available frequency domain resource is indicated by a parent node or a CU by using the frequency domain resource information.

Optionally, the available frequency domain resource is related to at least one of the following:
an available frequency domain range of the DU that is indicated by the frequency domain resource information;
carrier bandwidth of the DU that is indicated by the frequency domain resource information;
carrier bandwidth of a DU of the parent node;
an available frequency domain range of the DU of the parent node;
operating bandwidth of a mobile node MT of the IAB node; and
a guard interval.

Optionally, the available frequency domain resource includes at least one of the following:
a remaining frequency domain resource obtained after at least one of the carrier bandwidth of the DU of the parent node and the available frequency range of the DU of the parent node is removed from the available frequency domain range of the DU;
a remaining frequency domain resource obtained after the guard interval and at least one of the carrier bandwidth of the DU of the parent node and the available frequency range of the DU of the parent node are removed from the available frequency domain range of the DU;
a remaining frequency domain resource obtained after the operating bandwidth of the MT of the IAB node is removed from the available frequency domain range of the DU;
a remaining frequency domain resource obtained after the operating bandwidth of the MT of the IAB node and the guard interval are removed from the available frequency domain range of the DU;
a remaining frequency domain resource obtained after at least one of the carrier bandwidth of the DU of the parent node and the available frequency domain range of the DU of the parent node is removed from the carrier bandwidth of the DU;
a remaining frequency domain resource obtained after the guard interval and at least one of the carrier bandwidth of the DU of the parent node and the available frequency domain range of the DU of the parent node are removed from the carrier bandwidth of the DU;
a remaining frequency domain resource obtained after the operating bandwidth of the MT of the IAB node is removed from the carrier bandwidth of the DU; and
a remaining frequency domain resource obtained after the operating bandwidth of the MT of the IAB node and the guard interval are removed from the carrier bandwidth of the DU.

Optionally, the available frequency domain resource is in at least one of the following relationships with the operating bandwidth of the MT of the IAB node:
the available frequency domain resource includes a frequency domain resource affected by the operating bandwidth of the MT;
the available frequency domain resource includes the operating bandwidth of the MT;
the available frequency domain resource and the operating bandwidth of the MT have overlapping resources; and
the available frequency domain resource is located within the operating bandwidth of the MT.

Optionally, the available frequency domain resource is related to a multiplexing manner of the IAB node.

Optionally, in a case that the IAB node supports spatial multiplexing FDM, the frequency domain resource information is further used to indicate that the available frequency domain resource can be used as an FDM multiplexing resource; or
in a case that the IAB node supports spatial multiplexing SDM, the frequency domain resource information is further used to indicate that the available frequency domain resource can be used as an SDM multiplexing resource.

Optionally, the apparatus further includes:
a first receiving module, configured to receive expected information reported by the IAB node, where the expected information includes at least one of the following:
an expected multiplexing manner and a frequency domain resource corresponding to at least one multiplexing manner.

Optionally, the available frequency domain resource is related to a duplexing manner of the IAB node, and the duplexing manner includes a duplexing manner supported by a DU cell of the IAB node, or a duplexing manner between a DU cell of the IAB node and at least one MT serving cell.

Optionally, available frequency domain resources related to different duplexing manners are independently obtained; and/or
a multiplexing manner of the DU of the IAB and the MT is related to the duplexing manner.

Optionally, the apparatus further includes at least one of the following:
a second receiving module, configured to receive the available frequency domain resource reported by the IAB node; and
a third receiving module, configured to receive a manner of obtaining the frequency domain resource information that is reported by the IAB node.

Optionally, the frequency domain resource information includes scheduling of the target node.

Optionally, the frequency domain resource information includes first scheduling performed by the MT of the IAB node, and the available frequency domain resource is determined based on the first scheduling; or
the frequency domain resource information includes second scheduling performed by a parent node on a DU of the IAB node, and the available frequency domain resource is determined based on the second scheduling.

Optionally, the available frequency domain resource includes:
a first available frequency domain resource determined based on a frequency domain range center of the first scheduling; or
a second available frequency domain resource determined based on a frequency domain range of the first scheduling.

Optionally, in a case that a distance between the frequency domain range center and a lowest frequency domain resource of a bandwidth part BWP of the MT is less than a distance between the frequency domain range center and a highest frequency domain resource of the BWP, the first available frequency domain resource includes or belongs to a frequency domain resource between the highest frequency domain resource of the BWP and an upper boundary of the frequency domain range; or
in a case that a distance between the frequency domain range center and a highest frequency domain resource of a bandwidth part BWP of the MT is less than a distance between the frequency domain range center and a lowest frequency domain resource of the BWP, the first available frequency domain resource includes or belongs to a frequency domain resource between the lowest frequency domain resource of the BWP and a lower boundary of the frequency domain range; or
the second available frequency domain resource includes a frequency domain resource outside the frequency domain range.

Optionally, effective time of the available frequency domain resource is configured by the target node.

Optionally, the target node configures the effective time by using at least one of the following indication parameters:
a period indication, a time domain offset, and a time domain resource size.

Optionally, in a case that the available frequency domain resource is independently configured in a first duplexing manner, the available frequency domain resource is valid only in time that is in the effective time and in which the first duplexing manner is used.

The resource configuration apparatus provided in this embodiment of this application can implement processes in the method embodiment of FIG 11. To avoid repetition, details are not described herein again, and a configuration effect of configuring a resource for the IAB node can be improved.

It should be noted that the resource configuration apparatus in this embodiment of this application may be an apparatus, or may be a component, an integrated circuit, or a chip in a target node.

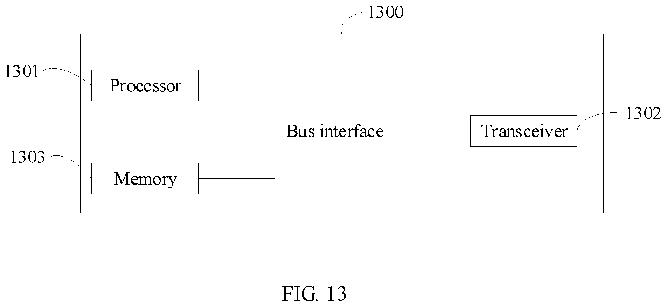

FIG 13 is a structural diagram of a network node according to an embodiment of the present invention. As shown in FIG 13, the network node 1300 includes a processor 1301, a transceiver 1302, a memory 1303, and a bus interface.

In an embodiment, the network node is an IAB node, which may be specifically as follows:

A processor 1301 or a transceiver 1302 is configured to obtain frequency domain resource information, where
the frequency domain resource information is used to indicate an available frequency domain resource of a distributed unit DU of the IAB node.

Optionally, the frequency domain resource information includes at least one of the following:
first frequency domain resource information configured by a parent node for the IAB node;
second frequency domain resource information configured by a centralized control unit CU for the IAB node; and
third frequency domain resource information predefined in a protocol.

Optionally, in a case that the IAB node obtains at least two of the first frequency domain resource information, the second frequency domain resource information, and the third frequency domain resource information, the available frequency domain resource is an available frequency domain resource indicated by frequency domain resource information determined in the at least two items according to first signaling.

Optionally, the available frequency domain resource is indicated by a parent node or a CU by using the frequency domain resource information.

Optionally, the available frequency domain resource is related to at least one of the following:
an available frequency domain range of the DU that is indicated by the frequency domain resource information;
carrier bandwidth of the DU that is indicated by the frequency domain resource information;
carrier bandwidth of a DU of the parent node;
an available frequency domain range of the DU of the parent node;
operating bandwidth of a mobile termination MT of the IAB node; and
a guard interval.

Optionally, the available frequency domain resource includes at least one of the following:
a remaining frequency domain resource obtained after at least one of the carrier bandwidth of the DU of the parent node and the available frequency range of the DU of the parent node is removed from the available frequency domain range of the DU;
a remaining frequency domain resource obtained after the guard interval and at least one of the carrier bandwidth of the DU of the parent node and the available frequency range of the DU of the parent node are removed from the available frequency domain range of the DU;
a remaining frequency domain resource obtained after the operating bandwidth of the MT of the IAB node is removed from the available frequency domain range of the DU;
a remaining frequency domain resource obtained after the operating bandwidth of the MT of the IAB node and the guard interval are removed from the available frequency domain range of the DU;
a remaining frequency domain resource obtained after at least one of the carrier bandwidth of the DU of the parent node and the available frequency domain range of the DU of the parent node is removed from the carrier bandwidth of the DU;
a remaining frequency domain resource obtained after at least one of the carrier bandwidth of the DU of the parent node and the available frequency domain range of the DU of the parent node are removed from the carrier bandwidth of the DU;
a remaining frequency domain resource obtained after the operating bandwidth of the MT of the IAB node is removed from the carrier bandwidth of the DU; and
a remaining frequency domain resource obtained after the operating bandwidth of the MT of the IAB node and the guard interval are removed from the carrier bandwidth of the DU.

Optionally, the available frequency domain resource is in at least one of the following relationships with the operating bandwidth of the MT of the IAB node:
the available frequency domain resource includes a frequency domain resource affected by the operating bandwidth of the MT;
the available frequency domain resource includes the operating bandwidth of the MT;
the available frequency domain resource and the operating bandwidth of the MT have overlapping resources; and
the available frequency domain resource is located within the operating bandwidth of the MT.

Optionally, the available frequency domain resource is related to a multiplexing manner of the IAB node.

Optionally, in a case that the IAB node supports spatial multiplexing FDM, the frequency domain resource information is further used to indicate that the available frequency domain resource can be used as an FDM multiplexing resource; or
in a case that the IAB node supports spatial multiplexing SDM, the frequency domain resource information is further used to indicate that the available frequency domain resource can be used as an SDM multiplexing resource.

Optionally, the transceiver 1302 is further configured to:
report expected information to a parent node or a CU, where the expected information includes at least one of the following:
an expected multiplexing manner and a frequency domain resource corresponding to at least one multiplexing manner.

Optionally, the available frequency domain resource is related to a duplexing manner of the IAB node, and the duplexing manner includes a duplexing manner supported by a DU cell of the IAB node, or a duplexing manner between a DU cell of the IAB node and at least one MT serving cell.

Optionally, available frequency domain resources related to different duplexing manners are independently obtained; and/or
a multiplexing manner of the DU of the IAB and the MT is related to the duplexing manner.

Optionally, the transceiver 1302 is further configured to perform at least one of the following:
reporting the available frequency domain resource to the parent node; and
reporting a manner of obtaining the frequency domain resource information to the parent node.

Optionally, in a case that the DU of the parent node does not schedule a frequency domain resource, the available frequency domain resource is independently determined by the IAB node; or
the frequency domain resource information includes scheduling of a parent node.

Optionally, the frequency domain resource information includes first scheduling performed by the MT of the IAB node, and the available frequency domain resource is determined based on the first scheduling; or
the frequency domain resource information includes second scheduling performed by a parent node on a DU of the IAB node, and the available frequency domain resource is determined based on the second scheduling.

Optionally, the available frequency domain resource includes:
a first available frequency domain resource determined based on a frequency domain range center of the first scheduling; or
a second available frequency domain resource determined based on a frequency domain range of the first scheduling.

Optionally, in a case that a distance between the frequency domain range center and a lowest frequency domain resource of a bandwidth part BWP of the MT is less than a distance between the frequency domain range center and a highest frequency domain resource of the BWP, the first available frequency domain resource includes or belongs to a frequency domain resource between the highest frequency domain resource of the BWP and an upper boundary of the frequency domain range; or
in a case that a distance between the frequency domain range center and a highest frequency domain resource of a bandwidth part BWP of the MT is less than a distance between the frequency domain range center and a lowest frequency domain resource of the BWP, the first available frequency domain resource includes or belongs to a frequency domain resource between the lowest frequency domain resource of the BWP and a lower boundary of the frequency domain range; or
the second available frequency domain resource includes a frequency domain resource outside the frequency domain range.

Optionally, effective time of the available frequency domain resource is configured by the CU or the parent node.

Optionally, the CU or the parent node configures the effective time by using at least one of the following indication parameters:
a period indication, a time domain offset, and a time domain resource size.

Optionally, in a case that the available frequency domain resource is independently configured in a first duplexing manner, the available frequency domain resource is valid only in time that is in the effective time and in which the first duplexing manner is used.

Optionally, in a case that a time-frequency resource of the IAB is not available in a time-frequency resource indicated by at least one of a time domain indication and a frequency domain indication, the time-frequency resource is not available; or
in a case that a time-frequency resource of the IAB is available in a time-frequency resource indicated by at least one of a time domain indication and a frequency domain indication, the time-frequency resource is available.

In another embodiment, the network node is a target node, and the target node is a centralized control unit CU or a parent node of the IAB node, which may be specifically as follows:

The transceiver 1302 is configured to configure frequency domain resource information for the integrated access backhaul IAB node; where
the frequency domain resource information is used to indicate an available frequency domain resource of a distributed unit DU of the IAB node, and the target node is a centralized control unit CU or a parent node of the IAB node.

Optionally, the available frequency domain resource is indicated by a parent node or a CU by using the frequency domain resource information.

Optionally, the available frequency domain resource is related to at least one of the following:
an available frequency domain range of the DU that is indicated by the frequency domain resource information;
carrier bandwidth of the DU that is indicated by the frequency domain resource information;
carrier bandwidth of a DU of the parent node;
an available frequency domain range of the DU of the parent node;
operating bandwidth of a mobile node MT of the IAB node; and
a guard interval.

Optionally, the available frequency domain resource includes at least one of the following:
a remaining frequency domain resource obtained after at least one of the carrier bandwidth of the DU of the parent node and the available frequency range of the DU of the parent node is removed from the available frequency domain range of the DU;
a remaining frequency domain resource obtained after the guard interval and at least one of the carrier bandwidth of the DU of the parent node and the available frequency range of the DU of the parent node are removed from the available frequency domain range of the DU;
a remaining frequency domain resource obtained after the operating bandwidth of the MT of the IAB node is removed from the available frequency domain range of the DU;
a remaining frequency domain resource obtained after the operating bandwidth of the MT of the IAB node and the guard interval are removed from the available frequency domain range of the DU;
a remaining frequency domain resource obtained after at least one of the carrier bandwidth of the DU of the parent node and the available frequency domain range of the DU of the parent node is removed from the carrier bandwidth of the DU;
a remaining frequency domain resource obtained after the guard interval and at least one of the carrier bandwidth of the DU of the parent node and the available frequency domain range of the DU of the parent node are removed from the carrier bandwidth of the DU;
a remaining frequency domain resource obtained after the operating bandwidth of the MT of the IAB node is removed from the carrier bandwidth of the DU; and
a remaining frequency domain resource obtained after the operating bandwidth of the MT of the IAB node and the guard interval are removed from the carrier bandwidth of the DU.

Optionally, the available frequency domain resource is in at least one of the following relationships with the operating bandwidth of the MT of the IAB node:
the available frequency domain resource includes a frequency domain resource affected by the operating bandwidth of the MT;
the available frequency domain resource includes the operating bandwidth of the MT;
the available frequency domain resource and the operating bandwidth of the MT have overlapping resources; and
the available frequency domain resource is located within the operating bandwidth of the MT.

Optionally, the available frequency domain resource is related to a multiplexing manner of the IAB node.

Optionally, in a case that the IAB node supports spatial multiplexing FDM, the frequency domain resource information is further used to indicate that the available frequency domain resource can be used as an FDM multiplexing resource; or
in a case that the IAB node supports spatial multiplexing SDM, the frequency domain resource information is further used to indicate that the available frequency domain resource can be used as an SDM multiplexing resource.

Optionally, the transceiver 1302 is further configured to:
receive expected information reported by the IAB node, where the expected information includes at least one of the following:
an expected multiplexing manner and a frequency domain resource corresponding to at least one multiplexing manner.

Optionally, the available frequency domain resource is related to a duplexing manner of the IAB node, and the duplexing manner includes a duplexing manner supported by a DU cell of the IAB node, or a duplexing manner between a DU cell of the IAB node and at least one MT serving cell.

Optionally, available frequency domain resources related to different duplexing manners are independently obtained; and/or
a multiplexing manner of the DU of the IAB and the MT is related to the duplexing manner.

Optionally, the transceiver 1302 is further configured to perform at least one of the following:
receiving, by the target node, the available frequency domain resource reported by the IAB node; and
receiving, by the target node, a manner of obtaining the frequency domain resource information reported by the IAB node.

Optionally, the frequency domain resource information includes scheduling of the target node.

Optionally, the frequency domain resource information includes first scheduling performed by the MT of the IAB node, and the available frequency domain resource is determined based on the first scheduling; or
the frequency domain resource information includes second scheduling performed by a parent node on a DU of the IAB node, and the available frequency domain resource is determined based on the second scheduling.

Optionally, the available frequency domain resource includes:
a first available frequency domain resource determined based on a frequency domain range center of the first scheduling; or
a second available frequency domain resource determined based on a frequency domain range of the first scheduling.

Optionally, in a case that a distance between the frequency domain range center and a lowest frequency domain resource of a bandwidth part BWP of the MT is less than a distance between the frequency domain range center and a highest frequency domain resource of the BWP, the first available frequency domain resource includes or belongs to a frequency domain resource between the highest frequency domain resource of the BWP and an upper boundary of the frequency domain range; or
in a case that a distance between the frequency domain range center and a highest frequency domain resource of a bandwidth part BWP of the MT is less than a distance between the frequency domain range center and a lowest frequency domain resource of the BWP, the first available frequency domain resource includes or belongs to a frequency domain resource between the lowest frequency domain resource of the BWP and a lower boundary of the frequency domain range; or
the second available frequency domain resource includes a frequency domain resource outside the frequency domain range.

Optionally, effective time of the available frequency domain resource is configured by the target node.

Optionally, the target node configures the effective time by using at least one of the following indication parameters:
a period indication, a time domain offset, and a time domain resource size.

Optionally, in a case that the available frequency domain resource is independently configured in a first duplexing manner, the available frequency domain resource is valid only in time that is in the effective time and in which the first duplexing manner is used.

The transceiver 1302 is configured to receive and send data under the control of the processor 1301, and the transceiver 1302 includes at least two antenna ports.

In FIG 13, a bus architecture may include any number of interconnected buses and bridges, and is specifically linked by various circuits of one or more processors represented by the processor 1301 and a memory represented by the memory 1303. The bus architecture may further link various other circuits such as a peripheral device, a voltage regulator, and a power management circuit together. These are all well-known in the art, and therefore are not further described in this specification. The bus interface provides interfaces. The transceiver 1302 may be multiple elements, in other words, includes a transmitter and a receiver, and provides a unit configured to communicate with various other apparatuses on a transmission medium.

The processor 1301 is responsible for managing the bus architecture and common processing, and the memory 1303 may store data used when the processor 1301 performs an operation.

Optionally, an embodiment of the present invention further provides a network node. The network node is an integrated and backhaul IAB node and includes a processor 1301, a memory 1303, and a program or an instruction that is stored in the memory 1303 and may run on the processor 1301. When the program or the instruction is executed by the processor 1301, processes of the embodiment of the foregoing resource configuration method can be implemented, and a same technical effect can be achieved. To avoid repetition, details are not described herein again.

Optionally, an embodiment of the present invention further provides a network node. The network node is a target node and includes a processor 1301, a memory 1303, and a program or an instruction that is stored in the memory 1303 and may run on the processor 1301. When the program or the instruction is executed by the processor 1301, processes of the embodiment of the foregoing resource configuration method can be implemented, and a same technical effect can be achieved. To avoid repetition, details are not described herein again.

An embodiment of this application further provides a readable storage medium. The readable storage medium may be non-volatile or may be volatile. A program or an instruction is stored in the readable storage medium. When the program or the instruction is executed by a processor, steps in the resource configuration method provided in the embodiments of this application are implemented.

An embodiment of this application further provides a computer program product. The computer program product is stored in a non-transient storage medium, and the computer program product is executed by at least one processor to implement steps in the resource configuration method provided in the embodiments of this application, and a same technical effect can be achieved. To avoid repetition, details are not described herein again.

The processor is a processor in the terminal or the network device in the foregoing embodiment. The readable storage medium includes a computer-readable storage medium such as a read-only memory (Read-Only Memory, ROM), a random access memory (Random Access Memory, RAM), a magnetic disk, an optical disc, or the like.

An embodiment of this application further provides a chip. The chip includes a processor and a communication interface, the communication interface is coupled to the processor, and the processor is configured to run a program or an instruction to implement processes of the embodiment of the resource configuration method, and a same technical effect can be achieved. To avoid repetition, details are not described herein again.

It should be understood that the chip mentioned in this embodiment of this application may also be referred to as a system-level chip, a system chip, a chip system, or a system on a chip.

It should be noted that in this specification, the term "include", "including", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. In the absence of more restrictions, an element defined by the statement "including a..." does not exclude another same element in a process, method, article, or apparatus that includes the element. In addition, it should be noted that a scope of the method and the apparatus in the embodiments of this application is not limited to: performing a function in a sequence shown or discussed, and may further include: performing a function in a basically simultaneous manner or in a reverse sequence based on an involved function. For example, the described method may be performed in a different order, and various steps may be added, omitted, or combined. In addition, features described with reference to some examples may be combined in other examples.

According to the descriptions of the foregoing implementations, a person skilled in the art may clearly understand that the foregoing method embodiments may be implemented by using software and a required universal hardware platform, or certainly may be implemented by using hardware. However, in many cases, the former is a better implementation. Based on such an understanding, the technical solutions of this application essentially or the part contributing to existing technologies may be implemented in a form of a software product. The computer software product is stored in a storage medium (such as a ROM/RAM, a magnetic disk, or an optical disc) and includes several instructions for instructing a terminal (which may be a mobile phone, a computer, a server, an air conditioner, or a network device) to execute the methods described in the embodiments of this application.

The embodiments of this application are described with reference to the accompanying drawings. However, this application is not limited to the foregoing specific implementations. The foregoing specific implementations are merely examples, but are not limiting. A person of ordinary skill in the art may make many forms without departing from the objective and the scope of the claims of this application, and these forms all fall within the protection scope of this application.

## Claims

1. A resource configuration method, comprising:
obtaining, by an integrated access backhaul IAB node, frequency domain resource information; wherein
the frequency domain resource information is used to indicate an available frequency domain resource of a distributed unit DU of the IAB node.

2. The method according to claim 1, wherein the frequency domain resource information comprises at least one of the following:
first frequency domain resource information configured by a parent node for the IAB node;
second frequency domain resource information configured by a centralized unit CU for the IAB node; and
third frequency domain resource information predefined in a protocol.

3. The method according to claim 2, wherein in a case that the IAB node obtains at least two of the first frequency domain resource information, the second frequency domain resource information, and the third frequency domain resource information, the available frequency domain resource is an available frequency domain resource indicated by frequency domain resource information determined in the at least two items according to first signaling.

4. The method according to claim 1, wherein the available frequency domain resource is indicated by a parent node or a CU by using the frequency domain resource information.

5. The method according to claim 1, wherein the available frequency domain resource is related to at least one of the following:
an available frequency domain range of the DU that is indicated by the frequency domain resource information;
carrier bandwidth of the DU that is indicated by the frequency domain resource information;
carrier bandwidth of a DU of a parent node;
an available frequency domain range of the DU of the parent node;
operating bandwidth of a mobile termination MT of the IAB node; and
a guard interval.

6. The method according to claim 5, wherein the available frequency domain resource comprises at least one of the following:
a remaining frequency domain resource obtained after at least one of the carrier bandwidth of the DU of the parent node and the available frequency range of the DU of the parent node is removed from the available frequency domain range of the DU;
a remaining frequency domain resource obtained after the guard interval and at least one of the carrier bandwidth of the DU of the parent node and the available frequency range of the DU of the parent node are removed from the available frequency domain range of the DU;
a remaining frequency domain resource obtained after the operating bandwidth of the MT of the IAB node is removed from the available frequency domain range of the DU;
a remaining frequency domain resource obtained after the operating bandwidth of the MT of the IAB node and the guard interval are removed from the available frequency domain range of the DU;
a remaining frequency domain resource obtained after at least one of the carrier bandwidth of the DU of the parent node and the available frequency domain range of the DU of the parent node is removed from the carrier bandwidth of the DU;
a remaining frequency domain resource obtained after the guard interval and at least one of the carrier bandwidth of the DU of the parent node and the available frequency domain range of the DU of the parent node are removed from the carrier bandwidth of the DU;
a remaining frequency domain resource obtained after the operating bandwidth of the MT of the IAB node is removed from the carrier bandwidth of the DU; and
a remaining frequency domain resource obtained after the operating bandwidth of the MT of the IAB node and the guard interval are removed from the carrier bandwidth of the DU.

7. The method according to claim 1, wherein the available frequency domain resource is in at least one of the following relationships with the operating bandwidth of the MT of the IAB node:
the available frequency domain resource comprises a frequency domain resource affected by the operating bandwidth of the MT;
the available frequency domain resource comprises the operating bandwidth of the MT;
the available frequency domain resource and the operating bandwidth of the MT have overlapping resources; and
the available frequency domain resource is located within the operating bandwidth of the MT.

8. The method according to claim 1, wherein the available frequency domain resource is related to a multiplexing manner of the IAB node.

9. The method according to claim 8, wherein in a case that the IAB node supports frequency division multiplexing FDM, the frequency domain resource information is further used to indicate that the available frequency domain resource can be used as an FDM multiplexing resource; or
in a case that the IAB node supports spatial multiplexing SDM, the frequency domain resource information is further used to indicate that the available frequency domain resource can be used as an SDM multiplexing resource.

10. The method according to claim 1 or 8, wherein the method further comprises:
reporting, by the IAB node, expected information to a parent node or a CU, wherein the expected information comprises at least one of the following:
an expected multiplexing manner and a frequency domain resource corresponding to at least one multiplexing manner.

11. The method according to claim 1, wherein the available frequency domain resource is related to a duplexing manner of the IAB node, and the duplexing manner comprises a duplexing manner supported by a DU cell of the IAB node, or a duplexing manner between a DU cell of the IAB node and at least one MT serving cell.

12. The method according to claim 11, wherein available frequency domain resources related to different duplexing manners are independently obtained; and/or
a multiplexing manner of the DU of the IAB and the MT is related to the duplexing manner.

13. The method according to claim 1, wherein the method further comprises at least one of the following:
reporting, by the IAB node, the available frequency domain resource to a parent node; and
reporting, by the IAB node, a manner of obtaining the frequency domain resource information to the parent node.

14. The method according to claim 1, wherein in a case that a DU of a parent node does not schedule a frequency domain resource, the available frequency domain resource is independently determined by the IAB node; or
the frequency domain resource information comprises scheduling of a parent node.

15. The method according to claim 1, wherein the frequency domain resource information comprises first scheduling performed by a parent node on an MT of the IAB node, and the available frequency domain resource is determined based on the first scheduling; or
the frequency domain resource information comprises second scheduling performed by a parent node on a DU of the IAB node, and the available frequency domain resource is determined based on the second scheduling.

16. The method according to claim 15, wherein the available frequency domain resource comprises:
a first available frequency domain resource determined based on a frequency domain range center of the first scheduling; or
a second available frequency domain resource determined based on a frequency domain range of the first scheduling.

17. The method according to claim 16, wherein
in a case that a distance between the frequency domain range center and a lowest frequency domain resource of a bandwidth part BWP of the MT is less than a distance between the frequency domain range center and a highest frequency domain resource of the BWP, the first available frequency domain resource comprises or belongs to a frequency domain resource between the highest frequency domain resource of the BWP and an upper boundary of the frequency domain range; or
in a case that a distance between the frequency domain range center and a highest frequency domain resource of a bandwidth part BWP of the MT is less than a distance between the frequency domain range center and a lowest frequency domain resource of the BWP, the first available frequency domain resource comprises or belongs to a frequency domain resource between the lowest frequency domain resource of the BWP and a lower boundary of the frequency domain range; or
the second available frequency domain resource comprises a frequency domain resource outside the frequency domain range.

18. The method according to claim 1, wherein effective time of the available frequency domain resource is configured by a CU or a parent node.

19. The method according to claim 18, wherein the CU or the parent node configures the effective time by using at least one of the following indication parameters:
a period indication, a time domain offset, and a time domain resource size.

20. The method according to claim 18, wherein in a case that the available frequency domain resource is independently configured in a first duplexing manner, the available frequency domain resource is valid only in time that is in the effective time and in which the first duplexing manner is used.

21. The method according to claim 1, wherein in a case that a time-frequency resource of the IAB node is unavailable in a time-frequency resource indicated by at least one of a time domain indication and a frequency domain indication, the time-frequency resource is unavailable; or
in a case that a time-frequency resource of the IAB node is available in a time-frequency resource indicated by at least one of a time domain indication and a frequency domain indication, the time-frequency resource is available.

22. A resource configuration method, comprising:
configuring, by a target node, frequency domain resource information for an integrated access backhaul IAB node; wherein
the frequency domain resource information is used to indicate an available frequency domain resource of a distributed unit DU of the IAB node, and the target node is a centralized control unit CU or a parent node of the IAB node.

23. The method according to claim 22, wherein the available frequency domain resource is indicated by a parent node or a CU by using the frequency domain resource information.

24. The method according to claim 22, wherein the available frequency domain resource is related to at least one of the following:
an available frequency domain range of the DU that is indicated by the frequency domain resource information;
carrier bandwidth of the DU that is indicated by the frequency domain resource information;
carrier bandwidth of a DU of a parent node;
an available frequency domain range of the DU of the parent node;
operating bandwidth of a mobile termination MT of the IAB node; and
a guard interval.

25. The method according to claim 24, wherein the available frequency domain resource comprises at least one of the following:
a remaining frequency domain resource obtained after at least one of the carrier bandwidth of the DU of the parent node and the available frequency range of the DU of the parent node is removed from the available frequency domain range of the DU;
a remaining frequency domain resource obtained after the guard interval and at least one of the carrier bandwidth of the DU of the parent node and the available frequency range of the DU of the parent node are removed from the available frequency domain range of the DU;
a remaining frequency domain resource obtained after the operating bandwidth of the MT of the IAB node is removed from the available frequency domain range of the DU;
a remaining frequency domain resource obtained after the operating bandwidth of the MT of the IAB node and the guard interval are removed from the available frequency domain range of the DU;
a remaining frequency domain resource obtained after at least one of the carrier bandwidth of the DU of the parent node and the available frequency domain range of the DU of the parent node is removed from the carrier bandwidth of the DU;
a remaining frequency domain resource obtained after the guard interval and at least one of the carrier bandwidth of the DU of the parent node and the available frequency domain range of the DU of the parent node are removed from the carrier bandwidth of the DU;
a remaining frequency domain resource obtained after the operating bandwidth of the MT of the IAB node is removed from the carrier bandwidth of the DU; and
a remaining frequency domain resource obtained after the operating bandwidth of the MT of the IAB node and the guard interval are removed from the carrier bandwidth of the DU.

26. The method according to claim 22, wherein the available frequency domain resource is in at least one of the following relationships with the operating bandwidth of the MT of the IAB node:
the available frequency domain resource comprises a frequency domain resource affected by the operating bandwidth of the MT;
the available frequency domain resource comprises the operating bandwidth of the MT;
the available frequency domain resource and the operating bandwidth of the MT have overlapping resources; and
the available frequency domain resource is located within the operating bandwidth of the MT.

27. The method according to claim 22, wherein the available frequency domain resource is related to a multiplexing manner of the IAB node.

28. The method according to claim 27, wherein in a case that the IAB node supports frequency division multiplexing FDM, the frequency domain resource information is further used to indicate that the available frequency domain resource can be used as an FDM multiplexing resource; or
in a case that the IAB node supports spatial multiplexing SDM, the frequency domain resource information is further used to indicate that the available frequency domain resource can be used as an SDM multiplexing resource.

29. The method according to claim 22 or 27, wherein the method further comprises:
receiving, by the target node, expected information reported by the IAB node, wherein the expected information comprises at least one of the following:
an expected multiplexing manner and a frequency domain resource corresponding to at least one multiplexing manner.

30. The method according to claim 22, wherein the available frequency domain resource is related to a duplexing manner of the IAB node, and the duplexing manner comprises a duplexing manner supported by a DU cell of the IAB node, or a duplexing manner between a DU cell of the IAB node and at least one MT serving cell.

31. The method according to claim 30, wherein available frequency domain resources related to different duplexing manners are independently obtained; and/or
a multiplexing manner of the DU of the IAB and the MT is related to the duplexing manner.

32. The method according to claim 22, wherein the method further comprises at least one of the following:
receiving, by the target node, the available frequency domain resource reported by the IAB node; and
receiving, by the target node, a manner of obtaining the frequency domain resource information reported by the IAB node.

33. The method according to claim 22, wherein the frequency domain resource information comprises scheduling of the target node.

34. The method according to claim 22, wherein the frequency domain resource information comprises first scheduling performed by a parent node on an MT of the IAB node, and the available frequency domain resource is determined based on the first scheduling; or
the frequency domain resource information comprises second scheduling performed by a parent node on a DU of the IAB node, and the available frequency domain resource is determined based on the second scheduling.

35. The method according to claim 34, wherein the available frequency domain resource comprises:
a first available frequency domain resource determined based on a frequency domain range center of the first scheduling; or
a second available frequency domain resource determined based on a frequency domain range of the first scheduling.

36. The method according to claim 35, wherein in a case that a distance between the frequency domain range center and a lowest frequency domain resource of a bandwidth part BWP of the MT is less than a distance between the frequency domain range center and a highest frequency domain resource of the BWP, the first available frequency domain resource comprises or belongs to a frequency domain resource between the highest frequency domain resource of the BWP and an upper boundary of the frequency domain range; or
in a case that a distance between the frequency domain range center and a highest frequency domain resource of a bandwidth part BWP of the MT is less than a distance between the frequency domain range center and a lowest frequency domain resource of the BWP, the first available frequency domain resource comprises or belongs to a frequency domain resource between the lowest frequency domain resource of the BWP and a lower boundary of the frequency domain range; or
the second available frequency domain resource comprises a frequency domain resource outside the frequency domain range.

37. The method according to claim 22, wherein effective time of the available frequency domain resource is configured by the target node.

38. The method according to claim 37, wherein the target node configures the effective time by using at least one of the following indication parameters:
a period indication, a time domain offset, and a time domain resource size.

39. The method according to claim 37, wherein in a case that the available frequency domain resource is independently configured in a first duplexing manner, the available frequency domain resource is valid only in time that is in the effective time and in which the first duplexing manner is used.

40. A resource configuration apparatus, comprising:
an obtaining module, configured to obtain frequency domain resource information; wherein
the frequency domain resource information is used to indicate an available frequency domain resource of a distributed unit DU of an IAB node.

41. The apparatus according to claim 40, wherein the available frequency domain resource is related to at least one of the following:
an available frequency domain range of the DU that is indicated by the frequency domain resource information;
carrier bandwidth of the DU that is indicated by the frequency domain resource information;
carrier bandwidth of a DU of a parent node;
an available frequency domain range of the DU of the parent node;
operating bandwidth of a mobile termination MT of the IAB node; and
a guard interval.

42. A resource configuration apparatus, comprising:
a configuration module, configured to configure frequency domain resource information for an integrated access backhaul IAB node; wherein
the frequency domain resource information is used to indicate an available frequency domain resource of a distributed unit DU of the IAB node, a target node comprises the apparatus, and the target node is a centralized control unit CU or a parent node of the IAB node.

43. The apparatus according to claim 42, wherein the available frequency domain resource is related to at least one of the following:
an available frequency domain range of the DU that is indicated by the frequency domain resource information;
carrier bandwidth of the DU that is indicated by the frequency domain resource information;
carrier bandwidth of a DU of a parent node;
an available frequency domain range of the DU of the parent node;
operating bandwidth of a mobile node MT of the IAB node; and
a guard interval.

44. A network node, wherein the network node is an integrated access backhaul IAB node, and comprises a memory, a processor, and a program or an instruction that is stored in the memory and that may run on the processor, and when the program or the instruction is executed by the processor, steps in the resource configuration method according to any one of claims 1 to 21 are implemented.

45. A network node, wherein the network node is a target node, and comprises a memory, a processor, and a program or an instruction that is stored in the memory and that may run on the processor, and when the program or the instruction is executed by the processor, steps in the resource configuration method according to any one of claims 22 to 39 are implemented.

46. A readable storage medium, wherein a program or an instruction is stored on the readable storage medium, and when the program or the instruction is executed by a processor, steps in the resource configuration method according to any one of claims 1 to 21 are implemented, or when the program or the instruction is executed by a processor, steps in the resource configuration method according to any one of claims 22 to 39 are implemented.

47. A chip, comprising a processor and a communication interface, wherein the communication interface is coupled to the processor, and the processor is configured to run a program or an instruction to implement steps in the resource configuration method according to any one of claims 1 to 21, or to implement steps in the resource configuration method according to any one of claims 22 to 39.

48. A computer program product, wherein the computer program product is stored in a non-transient readable storage medium, and the computer program product is executed by at least one processor to implement steps in the resource configuration method according to any one of claims 1 to 21, or the computer program product is executed by at least one processor to implement steps in the resource configuration method according to any one of claims 22 to 39.

49. A communication device, configured to perform steps in the resource configuration method according to any one of claims 1 to 21, or configured to perform steps in the resource configuration method according to any one of claims 22 to 39.
